# EUROPEAN PATENT SPECIFICATION

(11) **EP 1 984 952 B1**
(45) Date of publication and mention of the grant of the patent: **07.04.2010**
(21) Application number: 06743188.2
(22) Date of filing: 14.02.2006
(51) Int. Cl.: H01L 29/06

(54) **METHOD AND APPARATUS FOR AUTHENTICATION**
VERFAHREN UND VORRICHTUNG ZUM AUTHENTIFIZIEREN
PROCÉDÉ ET DISPOSITIF D'AUTHENTIFICATION

(43) Date of publication of application: 29.10.2008
(73) Proprietor: Telefonaktiebolaget LM Ericsson (publ), 16483 Stockholm (SE)
(72) Inventor: MARIBLANCA NIEVES, David, E-28045 Madrid (ES)
(74) Representative: Elzaburu Marquez, Alberto
(86) International application number: PCT/EP2006/050931
(87) International publication number: WO 2007/093216

(56) References cited:
- US-A1- 2004 098 588
- US-A1- 2004 168 054
- "Universal Mobile Telecommunications System (UMTS)" ETSI STANDARDS, EUROPEAN TELECOMMUNICATIONS STANDARDS INSTITUTE, SOPHIA-ANTIPO, FR, vol. 3-SA3, no. V660, September 2005 (2005-09), XP014032057 ISSN: 0000-0001 cited in the application

## Description

### FIELD OF THE INVENTION

The present invention relates to a method and an apparatus for authenticating a user terminal in a telecommunications system.

### BACKGROUND

Authentication is a process usually run in a telecommunications system with the purpose of verifying that a user terminal requesting access to it, or requesting a service through it, is the one who claims to be. The term "user terminal" (also referred to as "user equipment", UE) does not necessarily relates to a terminal operated by a human user, but, in general, to a device suitable to request the access or the service, regardless of it is being operated by a human user or not.

The authentication process for a UE accessing a telecommunication system varies depending on several factors, such as the security criteria implemented by the telecommunication system, the characteristics and capabilities of the UE, the communication protocols used, etc. These variations caused the development of a plurality of authentication mechanisms so as to fit with different authentication scenarios, and thus, to fulfil different authentication requirements in different telecommunication systems.

However, regardless specific details of a particular telecommunication system, and of a particular authentication mechanism, a kind of functional node uses to be common in many authentication scenarios. This node is usually known (and hereinafter shall be referred to) as an authentication server, and is a server comprising functionality to communicate, directly or indirectly (e.g. via other intervening node/s), with a UE so as to grant or deny the requested access, or the requested service, depending on whether the authentication of the UE it performs is successful or not.

Typically, an authentication server may also perform authorization functions, so as to allow or deny the provision of a given service to a (usually, previously authenticated) UE, and can take part in the accounting of the services which are provided to said UE. Due to this customary sum of authentication, authorization and accounting functionalities, some authentication servers are commonly known as AAA servers. For simplicity, the term AAA server will be used across the present application to refer a server which is entitled to authenticate a UE in a telecommunications system, regardless on whether said server is also involved in authorization and/or accounting functions or not, as these processes are not relevant for the invention.

In most of the cases, the authentication process comprises the reception of a user identifier from the UE in a AAA server of the telecommunications system to which the UE is (directly or indirectly) connected. The received user identifier, which can identify the user of the UE, the UE, or both, is then authenticated by the AAA server. This process can be accomplished according to well known techniques which can ensure that the received identifier(s) is(are) authentic (e.g. received from the right source - terminal or user). An example of these techniques, some of which are applicable to authentication in complex authentication scenarios (e.g. comprising an access network, such as a Wireless Local Area Network, WLAN, and a mobile communications network) is given in the RFC-4187 *"Extensible Authentication Protocol Method for 3rd Generation Authentication and Key Agreement (EAP-AKA)",* (Jan-2006; http://www.ietf.org/rfc/rfc4187.txt?number=4187).

The signaling traffic due to authentication process can become a significant load factor. Thus, a telecommunications system can comprise a plurality of AAA servers; thereby, allowing the signaling traffic resulting from authentication processes to be distributed among them according to well known load balancing mechanisms like round-robin.

For cost-efficiency reasons, a simple and substantially even distribution of the traffic load due to authentication among a plurality of AAA servers requires them to have a substantially similar capacity for handling traffic load due to authentication. Nevertheless, there can be internal conditions in a particular AAA server which can temporarily cause a downgrade on its performance. Notifying a load distribution function (e.g. a node performing the distribution of authentications of UEs among the existing AAA servers according to, for example, a round-robin algorithm) about that situation may even worsen the internal conditions of the concerned AAA server (e.g. the problem consist on a congestion on its communication module), and/or can require a more complex load-distribution algorithm for the load distribution function. In some telecommunications systems, the authentication of a connected UE is performed periodically. Periodical re-authentications increases the signaling traffic load resulting from authentication processes, specially when there is a large number of connected UEs. In some authentication scenarios, this is alleviated using "fast re-authentication".

Fast re-authentication allows a subsequent authentication of a UE based on a key derived from a previous "full" authentication process run for said UE, wherein said derived key is shared by the (previously) authenticated UE and by the AAA server which performed previously the (full) authentication process. Fast re-authentication is described in the aforementioned RFC-4187 (EAP-AKA), in 3^{rd} Generation Partnership Project 3GPP specification 33.234 "WLAN interworking security" V6.7.0 (Dec-2005; http://www.3gpp.org/ftp/Specs/archive/33_series/33.234), and US 2004/0098588 A1. However, not all the UEs remain connected to a telecommunications system during the same time; therefore, fast re-authentication brings about again the problem of a simple load distribution, as it requires the knowledge of the shared key and, thus, the involvement of the same AAA server which previously preformed the (full) authentication of a UE. Accordingly an AAA server can become more loaded if some of the UEs it has authenticated remain connected for a long time, as it will continue being assigned to attend new authentications.

### SUMMARY OF THE INVENTION.

To alleviate at least some of the aforementioned problems the invention provides a method for authenticating a user terminal as claimed in claim 1. The invention also provides an apparatus for authenticating a user terminal as claimed in claim 10 and a computer program for authenticating a user terminal from a computer-based authentication server as claimed in claim 19. Embodiments of the invention are set out in the dependent claims.

According to the invention, the authentication server that authenticates the user-identifier received from a user terminal sends a new user-identifier to the user terminal for being used from that user terminal in a subsequent authentication, wherein said new user-identifier is selected from that authentication server according to status information about authentication servers in that telecommunications system which are selectable according to said status information.

The status information can comprise availability status information about the authentication server which performs said authentication, as well as availability status collected or received about other authentication servers in the system, and availability status of a central database where, according to an embodiment of the invention, some data needed for a subsequent authentication of a user terminal can be stored. The selected new user-identifier comprises information which is usable to route a subsequent authentication from said user terminal to an authentication server selected from the set of authentication servers which are selectable according to said status information.

By including addressing information selected according to availability status information about selectable authentication server(s) in the user-identifier which is delivered to the authenticated user terminal, the signaling traffic load due to authentication can be more evenly distributed among the less loaded authentication servers in a simple manner.

According to embodiments of the invention, said addressing information can comprise data usable to determine a specific authentication server, and/or a set of authentication servers where to route the next authentication of the user terminal. Additionally, or alternatively, the addressing information can comprise data usable to determine a particular authentication server, or servers, which shall be excluded when selecting an authentication server where to route the next authentication of the user terminal. Since conventional name-to-address translation techniques allows defining a flexible relationship between a given identifier and a given address, or set of addresses, this embodiment allows easily to refer to one or a set of authentication servers which can be included, or shall be excluded, for a next authentication of a user terminal.

According to a further embodiment of the invention, when a first key, usable for a subsequent authentication of a user terminal, is generated as a result of a successful authentication of that terminal, said key is stored accessible to at least one of the authentication servers which are selectable according to the delivered new user-identifier. In one case, when the delivered new user-identifier addresses to a specific authentication server, the authentication server performing the authentication of the user terminal can send that key to that specific authentication server. In another case, the key can be sent to a central database server accessible to the selectable authentication server(s) which is (are) addressable according to the delivered new user-identifier. In the first case, the server which authenticates the user terminal forces the next authentication of that terminal to be performed by a specific authentication server and provides it in advance with the necessary information. In the latest case, the central database server can provide to the authentication server which performs a subsequent authentication of said user terminal the key stored for that terminal which was derived from a previous authentication.

When fast re-authentication is used, the need of using for a subsequent authentication the same authentication server which performed a previous authentication can be overridden, as the necessary information is provided, directly or indirectly, to the authentication server selected for said subsequent authentication from the authentication server which performs the previous authentication.

According to a further embodiment of the invention, the central database server can also generate in advance a second key, derivable from a received first key, which, in some cases, is usable to encrypt communications between the user terminal and the telecommunications system from a subsequent authentication of that user terminal. By deriving said second key in advance, and by providing it to an authentication server together with the first key, the central database server can thus save processing time for an authentication server which performs a subsequent authentication of said user terminal.

### BRIEF DESCRIPTION OF THE DRAWINGS

Figure 1 shows a simplified view of a telecommunications system.
Figure 2 shows a schematic representation of some functional modules of an apparatus for authenticating user terminals in a telecommunications system.
Figure 3 shows a flowchart illustrating steps of a method for authenticating a user terminal according to the invention.
Figure 4 shows a simplified signaling flow illustrating some embodiments of the invention.

### DETAILED DESCRIPTION

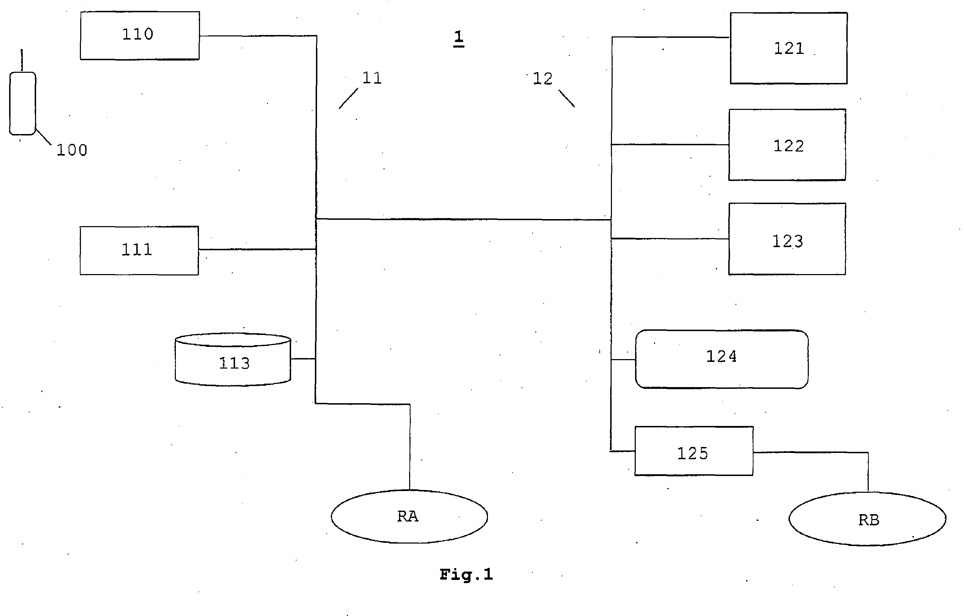

Exemplary embodiments of the invention shall now be described with reference to figures 1 to 4.

The telecommunications system 1 schematically illustrated in Fig.1 comprises a first network 11 and a second network 12. For a better understanding of some embodiments of the invention, it can be assumed that the scenario illustrated in Fig.1 represents the WLAN-3GPP scenario shown, for example, in the figure 1 of the aforementioned 3GPP specification 33.234; wherein the first network (11) would represent a WLAN network and the second network (12) would represent a 3^{rd}. generation 3G mobile communications network. The schematic representation of Fig.1 could also represent the telecommunications system architecture shown in figure 1 of the 3GPP specification 43.318 "Generic access to the A/Gb interface"(V6.3.0, Sep-2005; http://www.3gpp.org/ftp/Specs/archive/43_series/43.318).

However, as the skilled person would readily understand, the present invention is not compelled to a specific telecommunications system, nor to a telecommunications system comprising two separate networks, as the one shown in Fig.1, but that it is equally applicable to any telecommunications system having a plurality of authentication servers where the authentication process for a connected user terminal is performed periodically.

The WLAN (11) comprises a plurality of access servers (110, 111) which serve as a primary point of attachment of the UE (100) to the telecommunications system (1). The WLAN may also comprise routing devices (not shown) so as to connect a user terminal (100) to a further network (RA, RB, 12).

A typical interworking scenario between a WLAN and a 3G network involves the provision of communication services to a user who has a subscription in a 3G network. The user utilizes a UE (100) capable of communicating with the WLAN access infrastructure (110, 111), and the UE is authenticated from a AAA server (121, 122, 123) in the corresponding 3G network (12). Then, when the UE has been successfully authenticated, it is granted access to, for example: a data network directly accessible from the WLAN (RA), such as the Internet, or to the network infrastructure of the 3G network (12). In this second case, the UE may, for example, be given access to a data network (RB), such as the Internet, an intranet, etc, or a subnetwork within the 3G network, such as the "IP Multimedia Subsystem" IMS, from which the UE may establish multimedia communications with other UEs. Element 125 in Fig.1 represents a gateway which can comprise the necessary protocol and/or media adaptation functions to allow the access to a further network (RB).

According to the authentication mechanisms currently standardized for WLAN-3G interworking scenarios (e.g. as described in chapter 6 of the aforementioned 3GPP Specification 33.234), the involvement of the home server (named as "Home Subscriber Server" HSS in the 3GPP terminology) is needed, at least for a first authentication of a UE, since "authentication vectors" are retrieved from it. Thus, element 124 in Fig.1 may represent a HSS server in the 3G network (12) where the corresponding subscription data for UE 100 are stored. As will be described later, network element 124 may equally represent a database where, according to the invention, some data needed for authentication may be stored.

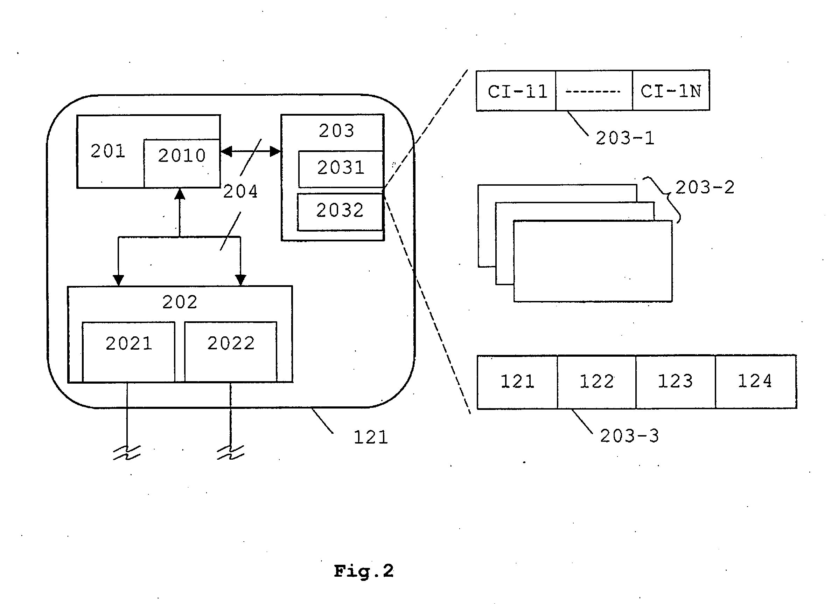

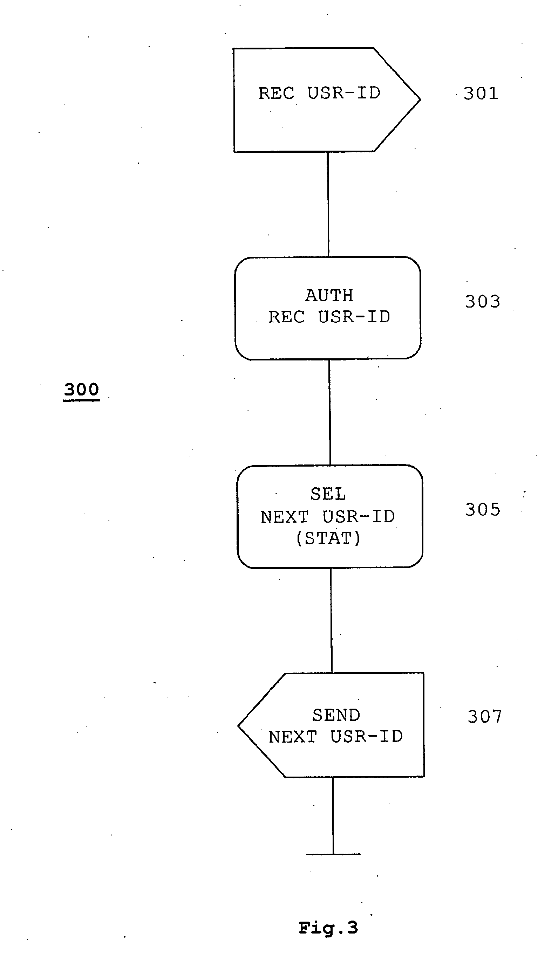

Although the telecommunications system of Fig.1 shows a simple 1-to-1 WLAN-3G scenario, a given WLAN network may be connected to more than one 3G networks. Further, the user of the UE may have a subscription in a 3G network which is not directly connected to the WLAN network (e.g. as described with reference to the "roaming" scenarios shown in figures 2 or 3 in the aforementioned 3GPP specification 33.234). For this reason, it is necessary to route the access requests from a UE (100) connected to the WLAN (11) to the appropriate 3G network (12) where the corresponding user subscription data is stored (i.e. the so called "home network"). To achieve this, the WLAN network may access to a database (113) which contains information to map a received user-identifier towards the appropriate network domain (e.g. a fixed entry point in a further network -12-, a specific server in a further network, a specific routing gateway, etc).

According to well-known techniques, this routing can be achieved by using a "Domain Name System" DNS (e.g. 113 can represent a DNS server), or by any other well-known name-to-address resolution technique. In the particular case of WLAN-3G interworking, for the first authentication the UE uses a user-identifier having a "Network Access Identifier" NAI format which (as described in 3GPP specification 23.234 V7.0.0, Dec-2005; e.g. chapter 5.3) comprises a "username" portion and a "realm" portion; wherein the realm portion identifies the home network and the username portion identifies the user subscription in said home network.

The internal simplified structure of AAA server 121 shown in Fig.1 shall now be described with reference to Fig.2, which considers a possible implementation as a computer-based apparatus, which, as in most of the modern telecommunications networks, is a preferred implementation basis for telecommunication servers. The same or similar structure and functionality hereinafter described for AAA server 121 can be assumed for any of the other AAA servers shown in Fig.1 (122, 123).

A telecommunications server which serves or mediates in the services provided by or through a telecommunications network (such as a AAA server, a HSS, etc.), regardless its specific construction details, may be considered as an apparatus comprising of one or more functional modules, each of them arranged to perform a specific (sub)function of the total functionality implemented by said server and, eventually, arranged to cooperate with some of the others.

Furthermore, the functionality of a given telecommunications server (which in fact may be considered as a "functional entity") may be distributed across various physical machines, each performing a part of the total functionality said server is assigned to perform. Once the functionality of a functional server entity in a telecommunications network has been defined (e.g. by a standard document), the construction of the functional modules to build up a realization of the corresponding physical machine(s) is a matter of routine work for those skilled in the art.

In particular, a AAA server implemented as a computer-based apparatus comprises software and hardware, which can be located within a physical machine, or distributed along various cooperating physical machines. A specific functional module of a AAA server implemented as a computer-based apparatus may comprise: software, hardware, or a combination of both, wherein said functional module is designed to perform a specific (sub)function of the server and, if proceeds, to cooperate with software and/or hardware parts which implements other functional module(s). The software can comprise one or more computer programs (computer readable program code) that, when executed by a computer-based apparatus makes it to behave according to a predefined manner, as determined by the specific program instructions in said programs, which is in accordance to the specific functionality of the server it implements.

Accordingly, the explanation given with reference to Fig.2 shall describe some functional components of a AAA server (121) without falling into specific construction details concerning the possible physical realizations, which are well known by those skilled and, consequently, which are not needed to understand the invention.

The simplified internal structure shown in Fig.2 for AAA server 121 comprises: a processing module 201, a communications module 202, a data storage module 203 and one or more internal communication buses 204 which allow data communication and cooperation between them.

The processing module (201) can comprise one or more processors (2010), which can be arranged to work in load-sharing or active-backup mode. In the authentication scenario illustrated by Fig.1, processor 2010 in AAA server 121 executes service logic for authenticating a UE 100 connected to network 11 by checking if a user-identifier received from said UE is a valid credential related to a service account in network 12, so as to allow UE 100 to access to (or remain connected to), or request a service from or through, networks 11 or 12. The service logic executed by processor 2010 is further enhanced with the novel functionality of the invention that shall be later detailed.

External communications between AAA server 121 and other entities (UE and other servers) are performed via communications module 202, illustrated as comprising two communication devices 2021 and 2022. Depending on implementation alternatives, some of the communication devices (2021, 2022) of AAA server 121 may be devoted to a specific kind of communication (e.g. only with some other server with which a standardized or proprietary signaling interface is used, only for a given type of communication protocol, etc). Also, some of the communication devices may be suited to allow any kind of communication that may be handled between AAA server 121 and another server (110, 122, 123, 124, 125). "RADIUS" protocol (IETF RFC2865, June 2000) or "DIAMETER" protocol (IETF RFC3588, September 2003) are example of communication protocols that are commonly used by AAA servers to communicate with other server entities in a telecommunications network. These protocols (as well as other protocols) can be easily extended so as to allow conveyance of new messages and/or new or modified contents for existing messages for new or modified applications, as the one disclosed by the present invention.

In any case, the number of communication devices (2021, 2022) in the communications module 202 may vary according to their respective capacity for handling external signaling compared with the overall signaling estimated for the AAA server 121. Depending also on implementation details, the communications module 202 may comprise some functional or physical elements (hardware, software or combination) that may be common to one or more communication devices (2021, 2022), such as a part of a given communications protocol stack, being, the other (protocol specific) parts residing on the corresponding communication device.

Data storage module 203 stores data needed for the operation of AAA server 121. Each data storage module may comprise one or more data storage devices (2031, 2032), which may comprise memory chips, magnetic or optical discs, etc, and combinations thereof; wherein the data storage module 203 may incorporate one or more storage devices (2031, 2032) of the same or different kind according to different implementation criteria, such as the data access speed required or the reliability desired for certain stored data. According to alternative realizations, the data storage module 203 can reside all within the same physical machine, or can be distributed among various storage machines. For example, computer readable program code, as well as other data that may be needed to control the operation of the AAA server 121, may reside within the same physical machine hosting the processor(s) of the processing module, while some other data (e.g. dynamic and/or static information related to UE currently authenticated from this AAA server) may be stored in another machine, and obtained/updated remotely.

Regardless physical data distribution details, Fig.2 illustrates schematically some of the data that can be handled by AAA server 121, which shall now be described.

The operation of AAA server 121 is controlled by computer-readable program code 203-1 comprising instructions (CI-11..., CI-1N) that, when executed by processor 2010, makes it to perform as an AAA server described heretofore, and also performing new functions according to embodiments of the invention, which shall be later described.

Reference 203-2 represents session context data records (SCTX-N) related to UEs that have been (or are being) authenticated from AAA server 121. These data can be needed, for example, at a subsequent authentication of a UE, or for performing authorization decisions and/or accounting functions, since, for a given session of a UE (e.g. the time between the UE attaches to the system until it detaches from it) these actions are commonly based on data known by the AAA server that has authenticated the UE for the whole session or for a pre-defined time interval of said session. As will be later described, a AAA server according to the invention can also keep some data about a UE for which it has not yet performed any authentication.

According to the invention, AAA server 121 can store information (203-3) about: the availability status of other AAA servers in the system (122, 123) -although not necessarily about all-, its own availability status (121), and the availability status of a central storage (124) where, according to the invention, some data usable for subsequent authentications of user terminals can be stored. Alternatively, AAA server 121 can check its own availability status, as well as the availability status of other servers (122, 123, 124) when it performs the processing steps of selecting the next user-identifier which it is going to send to a UE for a subsequent authentication-

The availability status information (203-3) stored for a given server (121, 122, 123, 124) (or the own availability status information held/stored by a given AAA server) can be related with several factors, such as the traffic load supported by the server in question, or the number of records related to authenticating/authenticated UEs it holds. AAA server 121 may update its own status information (121) according, for example, to its current signaling traffic conditions and/or the number of active session context records (SCTX-N). Also, AAA server 121 can receive data from other server (122, 123, 124), or send data to them (e.g. periodically, spontaneously, upon request), so as to update (and allow them to update) the corresponding status information. The status information can also be collected by AAA server 121 from other servers. According to another embodiment, the status information can be reported from the AAA servers (121, 122, 123) to a central database storage (e.g. 124), from which, the status information can be distributed and/or requested.

A simple embodiment would require a AAA server to keep only information about its own status; which can avoid the need of collecting and/or receiving availability status information from other servers in the telecommunications system.

In a plain implementation the status information (203-3) stored in AAA server 121 for any server (121, 122, 123, 124) can be a simple "flag" stating the available/not-available status of that server. In a more complex realization, the status information for a given server can take a plurality of values, e.g. ranging from "full availability" to "total unavailability". The more detailed is the availability status information (203-3) accessible to a given AAA server, the more efficient can be the next AAA server selection made from said AAA server for a subsequent authentication of a user terminal (as will be later described), and the more evenly can be the load due to authentication be distributed among the plurality of available AAA servers.

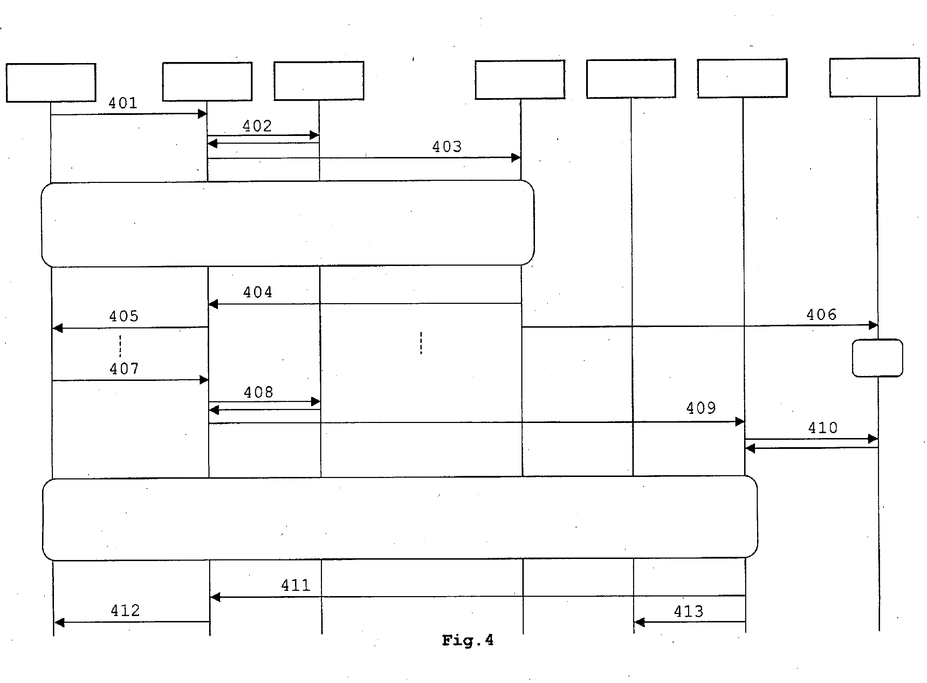

A method for handling the authentication of a UE in a telecommunications system (1) shall now be described with reference to figures 3 and 4.

The flowchart shown in Fig.3 illustrates the basic steps performed by a AAA server when dealing with the authentication process (300) of a UE 100. These steps, as well as further steps later referred in reference to Fig.4, can be performed by any of the AAA servers (121, 122, 123) of a telecommunication system (1), thereby achieving in a simplified manner to distribute the signaling and processing load due to UE authentications according to the available resources of the involved servers.

Step 301 represents the arrival of a message to a AAA server comprising a user-identifier that needs to be authenticated. In a WLAN-3G scenario, the AAA server (e.g. 121) in the 3G network domain (12) typically communicates via an access server (e.g. 110) in the WLAN domain (11), which, in turn, relays the authentication messages between the UE (100) and the AAA server. On arrival of the message 301, the AAA server proceeds on step 303 to authenticate the received user-identifier.

Details concerning specific actions carried out in the AAA server on step 303 depend to a great extent on the authentication mechanism utilized. For example, if the authentication mechanism is the aforementioned EAP-AKA (or "EAP-SIM", as defined in the RFC-4186 *"Extensible Authentication Protocol Method for Global System for Mobile Communications Subscriber Identity Modules*"; Jan-2006; http://www.ietf.org/rfc/rfc4186.txt?number=4186), sub-steps embodied within this step may comprise, among others, the retrieval of authentication vectors from a HSS, the construction and sending of the corresponding challenge to the UE, and the reception of the subsequent response from the UE.

On step 305, the AAA server checks the availability status of one or more authentication servers in the telecommunications system (121, 122, 123). As referred earlier, this step can also comprise checking the availability status of a central storage (124) where, according to the invention, some authentication data can be stored. In a simple implementation, a AAA server can check only its own status information (203-3, 121); thereby, avoiding the need of collecting and/or receiving availability status information from other servers in the telecommunications system. Next, the AAA server selects a new user-identifier comprising addressing information which is usable to route the subsequent authentication to a AAA server in the telecommunications system according to the checked availability status. The selected new user-identifier which is to be used in a subsequent authentication from the user terminal is then sent on step 307 to be delivered to that user terminal.

It shall be noted here that some of the steps shown in Fig.3 need not to be necessarily performed in the illustrated order. For example, depending on the authentication mechanism used, the step of authenticating the received user-identifier (303) may comprise, e.g. as a sub-step, the step of sending the new user-identifier (307) and, thus, the previous step of selecting said user-identifier (305). This, for example, can be the case wherein EAP-AKA or EAP-SIM are used as authentication mechanisms, since the "next re-authentication identifier" is sent to the user terminal before the received user-identifier has been fully authenticated. It shall also be noticed that the steps of selecting the new user-identifier for a subsequent authentication (305) and the step of delivering it to the user terminal (307) are not necessarily compelled to EAP-AKA or EAP-SIM fast re-authentications, but that can be equally applied in any other authentication mechanisms which comprises the reception of a user-identifier from a user terminal comprising addressing information usable for routing said identifier to a given network domain for authentication.

As will be herein described, the selected new user-identifier can be such that comprises addressing information usable to include and/or exclude AAA server(s) to perform the next authentication of a UE. In particular, the selected new user-identifier can comprise information usable to: determine a specific authentication server among the plurality of AAA servers in the system 1 which shall perform a subsequent authentication of the UE, and/or determine a set of said AAA servers where a subsequent message for the authentication of said UE can be routed so as to be performed in any one of them. Additionally, or alternatively, the selected new user-identifier can comprise information usable to: determine a specific authentication server among the plurality of AAA servers in the system 1 which should not perform a subsequent authentication of the UE, and/or determine a set of said AAA servers where a subsequent authentication of said UE should not be performed.

Several techniques can be used so as to make the selected new user-identifier to comprise information usable for routing. For example, the user-identifier can be structured in such a way that comprises a network address. However, currently, name-to-address translation techniques allow defining a flexible relationship between addressing information comprised in a given identifier and a given address (e.g. a network address), or set of addresses. For example, the use of identifiers having a NAI format and a DNS is one of said techniques, which shall be used hereinafter to illustrate some of the embodiments of the invention. Nevertheless, any technique may be used to include, and later identify, in the user-identifier where the corresponding addressing information is (e.g. including it in a specific portion, tagging it, etc). Thus, the only condition would be that the AAA that generates the user-identifier to be delivered to the user terminal for a subsequent authentication, and the entity resolving the corresponding address (e.g. DNS server or similar), both know and apply the same convention.

When using identifiers having NAI format, the routing of an authentication message to a specific AAA server is usually indicated by the "realm" part of the user-identifier. Said realm can be resolved entirely by a DNS server (or a database storing similar kind of translation information) accessible to the WLAN (e.g. 113, shown in Fig.1), or partially. In this latest case from the WLAN network 11 can be resolved the realm of the home 3G network 12, and then, the AAA server name of a particular AAA server can be resolved in the network 12, for example, by another DNS server accessible to said network (not shown in Fig.1), or by a entry node performing a load distribution of authentications among a set of AAA servers.

For example, assuming that the UE sends a user-identity such as: "123456789@AAAx.OperatorX.es", these two cases can take place:
1.- The WLAN 11 network performs full realm name resolution. In this case, a DNS 113 accessible by the WLAN network 11 (or a similar database comprising a name-to-address translation table) is able to resolve completely the address of a particular AAA server in the 3G home network 12 and gets, for example the "Internet Protocol" IP address of AAA server 121; thereby allowing to send the authentication request message comprising the user-identity directly to that AAA server.
2.- The realm name is resolved by WLAN network 11 and by the home 3G network 12. In this case the WLAN network is only able to resolve the received identifier so as to route the request to the home network 12, where an entry point node can perform the final delivery to the corresponding AAA server. The entry point in this case can be the aforementioned entry node performing a load distribution, a entry node which can query a DNS server in network 12 (not shown in Fig.1), or a particular AAA server which can, for example, check a internal distribution table (e.g. which maps identifiers to AAA servers) or a DNS server.

The second case is, in principle, the most realistic, as it covers the business split between the WLAN operator and the mobile home network operator. That is, a WLAN network operator can make use of a DNS that knows where to find a network entry point for "OperatorX.es", but is not able to find a particular AAA server in said network. In this case, the knowledge of the structure of AAA servers in the home network 12 can correspond to a DNS server owned by the network operator of the network 12. Nevertheless, the first option may exist in the real world if, for example a mobile network operator decides to deploy also a WLAN network infrastructure 11. In this case, there could be no obstacles for the mobile network operator to make DNS servers accessible to the WLAN networks and make a full realm name resolution at one time. For the sake of simplicity, the description given later with reference to Fig.4 will consider this case.

The way a home network 12 defines the realm names, in order to use them to indicate a specific AAA server, or a specific set of AAA servers, is up to the home network operator and can be achieved by using any suitable naming convention. As it doesn't need to be interpreted by the UE, any naming convention can be used as long as they are understood by the DNS servers or similar translation database (s) .

Some simple rules for building up the realm portion of a user-identifier selected in step 305 having NAI format shall now be given as examples. As will be readily understood, the arrangement of the realm portion made by a AAA server for selecting a subsequent AAA server for a subsequent authentication of a user terminal is compatible with existing load-balancing techniques, as the realm portion can indicate, explicitly or implicitly, more than one selectable AAA server (i.e. a node performing load distribution of authentications may perform said distribution among the, explicitly or implicitly, indicated AAA servers).

Preferably, the operator name of the operator of the home network 12 is always included. For example, the realm portion of the user-identifier can comprise something like "zzz.operatorX.es". According to this example case, the sub-portion "operatorX. es" of the realm portion of the NAI would be usable to address from the WLAN 11 an entry point in the network 12 of the operator "operatorX".

The sub-portion "zzz" would then comprise information to select one, or a set, of AAA server(s) in the network 12 for a subsequent authentication of the user terminal 100, or to exclude for that subsequent authentication one, or a set, of AAA servers. For example, AAA server 121 may be assigned to a specific identifier, e.g. "1", AAA server 122 be assigned to identifier "2" and AAA server 123 be assigned to identifier "3". A specific identifier may also be used to designate (and thus, select) any AAA server in network 12, such as "AAA". A special character, such as "+" can be used to indicate one, or a set of, AAA server (s) which can be selected for a subsequent authentication of the user terminal 100, and another special character, such as "-" can be used to indicate one, or a set of, AAA server(s) which should be excluded for a subsequent authentication of the user terminal 100.

Name-to-address translation information stored in DSN servers, or similar databases, can then be configured accordingly with the necessary information so as to resolve the realm portion of a NAI into information usable to route an authentication message to the appropriate AAA server which, according to the addressing information contained in said realm portion, is a selectable AAA server.

According to the simple rules defined above by way of example, a user-identifier received from a user terminal in a subsequent authentication such as:
a) "123456789@AAA.operatorX.es"; would indicate that any available AAA server in network 12 can be selected to carry out the authentication of the received user-identifier.
b) "123456789@AAA+2.operatorX.es" (or "123456789@2.operatorX.es"); would indicate that AAA server "2" (122) can be selected to carry out the authentication of the received user-identifier.
c) "123456789@AAA+2+3.operatorX.es" (or "123456789@+2+3.operatorX.es"); would indicate that AAA servers "2" (122) and "3" (123) can be selected to carry out the authentication of the received user-identifier.
d) "123456789@AAA-2.operatorX.es" (or "123456789@-2.operatorX.es"); would indicate that AAA server "2" can not be selected to carry out the authentication of the received user-identifier.
e) "123456789@AAA+2-3.operatorX.es" (or "123456789@+2-3.operatorX.es"); would indicate that AAA server "2" can be selected to carry out the authentication of the received user-identifier, but not AAA server "3".

Furthermore, the home network 12 can conceal its internal structure by sending the addressing information in an encrypted way; for example, instead of sending the realm portion full in clear, such as "AAA+2.operatorX.es", a sub-portion of the realm could be encrypted (e.g. "*srv33a4*.operatorX.es") so as to be deciphered when receiving the delivered user-identifier for a subsequent authentication.

The simplified signaling flow of Fig.4 will now be described to illustrate some of the aforementioned embodiments.

In flow 401 an access server 110 in the WLAN network 11 receives a user-identity from the user terminal 100. This flow is usually preceded by the establishment of a connection between the user terminal and the WLAN network, using WLAN technology specific procedures, and, usually, preceded also by a request from the WLAN to the user terminal to send a user-identity for starting an authentication process (flows not shown in Fig.4 for simplicity).

In order to route the received user-identity for authentication to the proper home network 12, or to the proper entry point or AAA server in said network 12, the realm portion of the received user-identifier (when in NAI format) is analyzed. As explained earlier, this can be achieved by querying a DNS 113, or similar database, in flow 402.

Assuming that flow 401 starts a first (full) EAP-AKA authentication of the user terminal 100, then the realm portion of the received user-identifier would (as specified on 3GPP TS 23.003 V6.6.0; Mar-2005) be based on the "International Mobile Subscriber Identity" IMSI of the user, and thus, would comprise addressing information so as to route the authentication flow towards an entry point in the home network to which said IMSI belongs to. In the example illustrated in Fig.4, the analysis results in that AAA server 121 is finally selected to perform the authentication of the user terminal based on the received user-identifier (e.g. round-robin distribution in the home network 12). As referred earlier, the routing path for the subsequent flow 403 may involve more entities, such as nodes performing load-distribution, other AAA servers acting as proxy or redirecting AAA servers, etc.

When the message conveying the user-identifier (403) arrives to the corresponding AAA server (121), the AAA server then starts the authentication of the user terminal 100 by executing the process 300 referred in Fig.3 (303, 305, 307).

For the particular case of EAP-AKA (or EAP-SIM) authentication, the step of authenticating the received user-identifier (303) may comprise, first the obtainment from the AAA server of authentication vectors from the HSS (e.g. 124) so as to build the corresponding "challenge" to be sent to the user terminal 100, and then, the reception and checking by the AAA server of the subsequent "response" to said "challenge" (flows not shown in Fig.4). Further, as referred earlier, in case of EAP-AKA (or EAP-SIM) authentication, the user-identifier selected by the AAA server to be used in a subsequent authentication can be sent within the "challenge", which makes the steps of selecting (305) and sending (306) said user-identifier to be embedded within the global step of authenticating the received user-identifier.

When (as assumed above) it is the first authentication for the user terminal 100, and EAP-AKA is used as the authentication mechanism, a "master key" MK (referred in this application also as "first key"), usable for a subsequent authentication of that user terminal, is generated by the AAA server 121 from the obtained authentication vectors. The generated MK is then used to generate further keys (referred in this application also as "second key"), such as: a "master session key" MSK and "transient EAP Keys" TEK. The MSK is then used to encrypt the media communication channel between the user terminal 100 and the WLAN access, while TEK keys are used to encrypt and provide integrity to EAP messages exchanged with the user terminal 100. These keys are derived both: by the AAA server 121 and by the user terminal 100 during the authentication process (300), and, if it is successful, the necessary ones are delivered (flow 404) to the access point 110 in the WLAN network 11 for applying the necessary ciphering/deciphering functions. Depending on the authentication mechanism used, some of the derived keys may remain for subsequent authentications performed for a user terminal while connected to an access network 11, or be renewed in subsequent authentications for being used subsequently. In the particular case of EAP-AKA, the MK and TEK remain until a new full authentication is performed, while MSK is renewed for each subsequent re-authentication.

A successful authentication of the user-identifier received from the user terminal 100 is notified in flow 404 from the AAA server to the access server 110 in the WLAN 11, which forwards the notification to the user terminal 100 in flow 405.

Assuming that AAA server 121 has decided not to take part in the subsequent authentication of the user terminal 100 (status information 203-3), then, it would have selected and delivered a new user-identifier to said user terminal, such as it contains addressing information for selecting the AAA server (s) which are selectable for that purpose, as described earlier. Then, in flow 406, it stores available to the selectable AAA server(s) the necessary data, so as to make possible to perform a subsequent fast re-authentication of the user terminal 100 from the one finally selected. In case of EAP-AKA, these data can comprise: the aforementioned MK, TEK and also a "counter" which, in case of fast re-authentication, prevents replay attacks, as its value varies with every subsequent authentication.

For example, in Fig.4 it is illustrated one case in which AAA server 121 makes available said data by storing them in the centralized storage 124 (flow 406), from which can be retrieved by a AAA server which is a selectable AAA server according to the delivered new user-identifier. These data can be sent in relationship with an identifier of the user of the subscription (such as the IMSI) and are stored in the centralized storage 124 accordingly. The identifier may also be the user-name portion of a received user-identifier with NAI format, as commonly, said portion either: comprises a permanent user-name (such as the IMSI), or is generated as a function of a permanent user-name, and thus, from a non-permanent user-name (such as a new user-identifier sent for a subsequent authentication), the corresponding permanent user-name can be obtained.

It shall be noticed that AAA server 121 may (by checking status information 203-3) accept itself as one more selectable AAA server, or as the only one. In these cases the AAA server 121 may also run flow 406.

The central storage 124 may perform a further step (309) so as to generate, from the received MK, the next (new) MSK which shall be used when the user terminal 100 is, later, subsequently authenticated. In this way, the central storage 124 can save processing time for the AAA server which shall be selected for a subsequent authentication of said user terminal, as said server would not need to waste processing time to derive the new MSK.

Flows 407 to 409 are similar to equivalent flows 401 to 403 described above, and are processed similarly. In this case, the user terminal 100 has included the user-identifier which was received during the previous authentication. Accordingly, as a result of using the addressing information included in the realm portion of said user-identifier (e.g. "3.operatorX.es"), the AAA server 123 receives the message (flow 409) comprising the user-identity sent by user terminal 100 to be authenticated. As AAA server 123 was not involved in the previous authentication of user terminal 100, it does not keep a corresponding session context (203-2) for it and, thus, the necessary (previously derived) shared keys; which, according to the known art, would make AAA server 123 to perform a full authentication of user terminal 100.

However, the invention allows AAA server 123 to dispense with the need of performing (again) a new full authentication in this case, which would require more signaling (obtainment of authentication vectors from the HSS) and more processing time due to the generation of all the necessary (new) keys (MK, MSK, etc). Thus, instead of being compelled to perform a full authentication of the user terminal 100, the AAA server 123 queries (flow 410) to the central storage 124 to obtain the necessary data (MK, TEK, "counter" and, eventually, new MSK generated in step 309) to perform a subsequent fast re-authentication.

It shall be noticed that the query (410) can be the same as the one used to obtain the corresponding authentication vectors. Accordingly, a AAA server (121, 122, 123) can be arranged so as to receive the necessary data to perform a subsequent fast re-authentication when asking for authentication vectors, and the central storage 124 (e.g. a HSS) can be arranged for providing said data when queried for authentication vectors for a given identifier. Furthermore, according to an embodiment of the invention, the central storage 124 may indicate (410) to AAA server 123 that it wants to be relieved from traffic load; which would make the AAA server 123 to behave in such a way that, at least for a subsequent authentication, the central storage is not involved (e.g. by assigning itself to serve said subsequent authentication, or by designing itself the next AAA server for that purpose, as will be later described). Moreover, the central storage 124 may also send (410) status information concerning other AAA servers in network 12, so that AAA server 123 gets updated to make a decision for selecting the AAA server that should take care of the next authentication of a user terminal according to said status information and according to its own load status.

Next, the AAA server 123 performs (300) the authentication of the user terminal 100 for received user-identifier using the data received from the central storage 124, and generates according to any of the embodiments described earlier the next user-identifier which is delivered to the user terminal 100 for a subsequent authentication. Flows 411 and 412 are similar to flows 404 and 405 described earlier.

In this case, it can be assumed that, after checking the status information (203-3), AAA server 123 decides that it wants to be relieved from a subsequent authentication of the user terminal 100, and that AAA server 122 is in good traffic conditions so as to carry out that task. In this case, AAA server 123 would select the realm portion of the user-identifier that it sends towards user terminal 100, so as to address AAA server 122. Then, assuming also it has received an unavailability indication from the central storage 124 (as referred above), in flow 413 it sends the necessary data to AAA server 122 (i.e. similar as the one sent by AAA server 121 in flow 406 to the central storage 124), so as to prevent at least one subsequent query to the central storage 124 from AAA server 122. Accordingly, at reception of flow 413, AAA server 122 would store these data in a session context data record of its own (203-2, SCTX-N) so that these data are available for it when it performs a further subsequent authentication for user terminal 100 (not shown in Fig.4).

State-of-the-art authentication servers are commonly implemented in computer-based machines. Accordingly, computer programs having computer-readable program codes are loaded in computer-based machines of telecommunications system, causing them to behave according to a predefined manner, as determined by the specific program codes, which is in accordance to their specific functionality. Thus, those skilled in creating and/or modifying computer programs, would, without departing of the teachings of the present invention, readily apply them to create and/or modify computer programs suitable to be loaded in a computer-based authentication server, said programs including computer-readable instructions for making said authentication server to behave according to any of the described embodiments.

The invention has been described with respect to some exemplary embodiments in an illustrative and non-restrictive manner. Variations can be readily apparent to those of ordinary skill in the art. For this reason, the invention is to be interpreted and limited in view of the claims.

## Claims

1. A method for authenticating a user terminal (100) in a telecommunications system comprising the steps of:
- receiving (301) in a authentication server (121) of said telecommunications system a user-identifier from the user terminal,
- authenticating (303) from the authentication server the received user-identifier, and
- sending (307) a new user-identifier from the authentication server to the user terminal to be used from said user terminal in a subsequent authentication; **CHARACTERIZED in that** further comprises the step of:
- selecting (305) from said authentication server said new user-identifier for a subsequent authentication according to status information (203-3) about selectable authentication servers (121,122,123) in said telecommunication system, wherein the selected new user-identifier comprises addressing information usable to route a subsequent authentication of said user terminal to a authentication server among said selectable authentication servers.

2. The method of claim 1, wherein the selected new user-identifier has a *Network Access Identifier* format, and wherein the addressing information is sent within its *realm* portion.

3. The method of claim 1, wherein the addressing information comprises data usable to determine at least one of:
- a specific authentication server among said selectable authentication servers,
- a set of authentication servers among said selectable authentication servers,
- a specific authentication server which is not a selectable authentication server for routing a subsequent authentication of said user terminal,
- a set of authentication servers which are not selectable authentication servers for routing a subsequent authentication of said user terminal.

4. The method of claim 1 further comprising the steps of:
- generating (304) in said authentication server a first key as a result of a successful authentication of said user terminal, and
- storing said key accessible to at least one of said selectable authentication servers.

5. The method of claim 4, wherein the step of storing comprises the step of:
- sending (413) from said authentication server said first key to a authentication server selected from said selectable authentication servers.

6. The method of claim 4, wherein the step of storing comprises the step of:
- sending (406) from said authentication server said first key to a central database (124) accessible to a authentication server selected from said selectable authentication servers.

7. The method of claim 6, wherein at least part of the information about selectable authentication servers in said telecommunication system is obtained from said central database.

8. The method of claim 6 further comprising the step of:
- providing (410) said first key from said central database to a authentication server performing a subsequent authentication of said user terminal.

9. The method of claim 6 further comprising the steps of:
- generating (309) in said central database a second key , derivable from said first key, and usable to encrypt communications between said user terminal and said telecommunications system, and
- providing (410) said second key from said central database to a authentication server performing a subsequent authentication of said user terminal.

10. Apparatus (121) for authenticating a user terminal (100) in a telecommunications system, the apparatus comprising a processor (2010) and a storage device (2031) in communication with said processor and storing instructions (203-1) adapted to be executed by said processor to:
- receive (301) a user-identifier from the user terminal,
- authenticate (303) the received user-identifier, and
- send (307) a new user-identifier to the user terminal to be used from said user terminal in a subsequent authentication;
**CHARACTERIZED in that** the storage device further stores instructions adapted to be executed by said processor to:
- select (305) said new user-identifier for a subsequent authentication according to status information (203-3) about selectable authentication servers (121,122,123) in said telecommunication system, wherein the selected new user-identifier comprises addressing information usable to route a subsequent authentication of said user terminal to a authentication server among said selectable authentication servers.

11. The apparatus of claim 10, wherein the selected new user-identifier has a *Network Access Identifier* format, and wherein the addressing information is sent within its *realm* portion.

12. The apparatus of claim 10, wherein the addressing information comprises data usable to determine at least one of:
- a specific authentication server among said selectable authentication servers,
- a set of authentication servers among said selectable authentication servers,
- a specific authentication server which is not a selectable authentication server for routing a subsequent authentication of said user terminal,
- a set of authentication servers which are not selectable authentication servers for routing a subsequent authentication of said user terminal.

13. The apparatus of claim 10, wherein the storage device further stores instructions adapted to be executed by said processor to:
- generate (304) a first key as a result of a successful authentication of said user terminal, and
- store said key accessible to at least one of said selectable authentication servers.

14. The apparatus of claim 13, wherein the storage device further stores instructions adapted to be executed by said processor to send (413) said first key to a authentication server selected from said selectable authentication servers.

15. The apparatus of claim 13, wherein the storage device further stores instructions adapted to be executed by said processor to send (406) said first key to a central database (124) accessible to a authentication server selected from said selectable authentication servers.

16. The apparatus of claim 15, wherein the storage device further stores instructions adapted to be executed by said processor to obtain at least part of the information about selectable authentication servers in said telecommunication system from said central database.

17. The apparatus of claim 15, wherein the storage device stores instructions adapted to be executed by said processor to obtain (410) from said central database a first key generated for a user terminal when performing a subsequent authentication of said user terminal.

18. The apparatus of claim 17, wherein the storage device stores instructions adapted to be executed by said processor to obtain (410) a second key from said central database when performing a subsequent authentication of said user terminal, said second key, derivable from said first key, and usable to encrypt communications between said user terminal and said telecommunications system.

19. A computer program for authenticating a user terminal (100) from a computer-based authentication server (121) in a telecommunications system, comprising:
- a computer-readable program code for processing the reception (301) of a user-identifier from the user terminal,
- a computer-readable program code for authenticating (303) the received user-identifier, and
- a computer-readable program code for causing the computer-based authentication server to send (307) a new user-identifier to the user terminal to be used from said user terminal in a subsequent authentication; **CHARACTERIZED in that** it further comprises:
- a computer-readable program code for selecting (305) said new user-identifier for a subsequent authentication according to status information (203-3) about selectable authentication servers (121,122,123) in said telecommunication system, wherein the selected new user-identifier comprises addressing information usable to route a subsequent authentication of said user terminal to a authentication server among said selectable authentication servers.

## Patentansprüche

1. Verfahren zur Authentisierung eines Benutzerendgeräts (100) in einem Telekommunikationssystem, umfassend die Schritte:
Empfangen (301) einer Nutzerkennung von dem Benutzerendgerät in einem Authentisierungsserver (121) des Telekommunikationssystems,
Authentisieren (303) der empfangenen Nutzerkennung durch den Authentisierungsserver, und
Senden (307) einer neuen Nutzerkennung vom Authentisierungsserver an das Benutzerendgerät, um von dem Benutzerendgerät in einer nachfolgenden Authentisierung benutzt zu werden;
**dadurch gekennzeichnet, dass** es den nachfolgenden Schritt umfasst:
Auswählen (305) einer neuen Nutzerkennung durch den Authentisierungsserver für eine nachfolgende Authentisierung gemäß Statusinformationen (203-3) über auswählbare Authentisierungsserver (121, 122, 123) in dem Telekommunikationssystem, wobei die ausgewählte neue Benutzerkennung Adressierungsinformationen umfasst, die zur Weiterleitung einer nachfolgenden Authentisierung des Benutzerendgeräts zu einem Authentisierungsserver aus den auswählbaren Authentisierungsservern genutzt werden können.

2. Verfahren nach Anspruch 1, wobei die ausgewählte neue Benutzerkennung ein Netzwerkzugangskennungsformat hat und wobei die Adressierungsinformation in dessen Domänenadressbereich gesendet wird.

3. Verfahren nach Anspruch 1, wobei die Adressierungsinformation Daten umfasst, die zur Bestimmung wenigstens:
eines spezifischen Authentisierungsservers innerhalb der auswählbaren Authentisierungsserver,
einer Gruppe von Authentisierungsservern innerhalb der auswählbaren Authentisierungsserver,
eines spezifischen Authentisierungsservers, der kein auswählbarer Authentisierungsserver zur Weiterleitung einer nachfolgenden Authentisierung des Benutzerendgeräts ist,
einer Gruppe von Authentisierungsservern, die keine auswählbaren Authentisierungsserver zur Weiterleitung einer nachfolgenden Authentisierung des Benutzerendgeräts sind,
geeignet sind.

4. Verfahren nach Anspruch 1, weiter umfassend die Schritte:
Erzeugen (304) eines ersten Schlüssels als Resultat einer erfolgreichen Authentisierung des Benutzerendgeräts in dem Authentisierungsserver, und
Speichern des Schlüssels in zugänglicher Weise für wenigstens einen der auswählbaren Authentisierungsserver.

5. Verfahren nach Anspruch 4, wobei der Schritt der Speicherung den Schritt des Sendens (413) des ersten Schlüssels von dem Authentisierungsserver zu einem Authentisierungsserver, der aus den auswählbaren Authentisierungsservern ausgewählt ist, umfasst.

6. Verfahren nach Anspruch 4, wobei der Schritt der Speicherung den Schritt des Sendens (406) des ersten Schlüssels durch den Authentisierungsserver an eine zentrale Datenbank (124) umfasst, die für einen Authentisierungsserver, der aus den auswählbaren Authentisierungsservern ausgewählt ist, zugänglich ist.

7. Verfahren nach Anspruch 6, wobei zumindest ein Teil der Information über auswählbare Authentisierungsserver in dem Telekommunikationssystem von der zentralen Datenbank bereitgestellt wird.

8. Verfahren nach Anspruch 6, weiter umfassend den Schritt der Bereitstellung (410) des ersten Schlüssels von der zentralen Datenband an einen Authentisierungsserver, der die nachfolgende Authentisierung des Benutzerendgeräts durchführt.

9. Verfahren nach Anspruch 6, weiter umfassend die Schritte:
Erzeugen (309) eines zweiten Schlüssels in der zentralen Datenbank, der von dem ersten Schlüssel abgeleitet ist und der zur Entschlüsselung der Kommunikation zwischen dem Benutzerendgerät und dem Telekommunikationssystem einsetzbar ist, und Bereitstellen (410) des zweiten Schlüssels von der zentralen Datenbank an einen Authentisierungsserver, der die nachfolgende Authentisierung des Benutzerendgeräts durchführt.

10. Vorrichtung (121) zur Authentisierung eines Benutzerendgeräts (100) in einem Telekommunikationssystem, die Vorrichtung umfasst einen Prozessor (2010) und eine Speichereinrichtung (2031) die in Kommunikation mit dem Prozessor steht und Instruktionen (203-1) speichert, die für eine Ausführung durch den Prozessor eingerichtet sind, um:
eine Benutzerkennung von dem Benutzerendgerät zu empfangen (301),
die empfangene Benutzerkennung zu authentisieren (303), und
eine neue Benutzerkennung an das Benutzerendgerät zu senden (307), um von dem Benutzerendgerät für eine nachfolgende Authentisierung benutzt zu werden;
**dadurch gekennzeichnet, dass** die Speichereinrichtung zudem Instruktionen speichert, die dazu eingerichtet sind, durch den Prozessor ausgeführt zu werden, um:
die neue Benutzerkennung für eine nachfolgende Authentisierung gemäß Statusinformationen (203-3) über auswählbare Authentisierungsserver (121, 122, 123) in dem Telekommunikationssystem auszuwählen (305), wobei die ausgewählte neue Benutzerkennung Adressierungsinformationen enthält, die zur Weiterleitung einer nachfolgenden Authentisierung des Benutzerendgeräts an einen Authentisierungsserver innerhalb der auswählbaren Authentisierungsserver nutzbar sind.

11. Vorrichtung nach Anspruch 10, wobei die ausgewählte neue Nutzerkennung ein Netzwerkzugangskennungsformat aufweist und wobei die Adressierungsinformation in deren Domänenadressbereich gesendet wird.

12. Vorrichtung nach Anspruch 10, wobei die Adressierungsinformation Daten enthält, um zumindest:
einen spezifischen Authentisierungsserver unter den auswählbaren Authentisierungsservern,
eine Gruppe von Authentisierungsservern unter den auswählbaren Authentisierungsservern,
einen speziellen Authentisierungsserver, der kein auswählbaren Authentisierungsserver zur Weiterleitung der nachfolgenden Authentisierung des Benutzerendgeräts ist,
eine Gruppe von Authentisierungsservern, die keine auswählbaren Authentisierungsserver zur Weiterleitung einer nachfolgenden Authentisierung des Benutzerendgeräts ist,
zu bestimmen.

13. Vorrichtung nach Anspruch 10, wobei die Speichereinrichtung weitere Instruktionen speichert, die dazu ausgebildet sind, durch den Prozessor ausgeführt zu werden, um:
einen ersten Schlüssel als Resultat einer erfolgreichen Authentisierung des Benutzerendgeräts zu erzeugen (304) und
den Schlüssel für wenigstens einen der auswählbaren Authentisierungsserver zugänglich zu speichern.

14. Vorrichtung nach Anspruch 13, wobei die Speichereinrichtung weiterhin Instruktionen speichert, die zur Ausführung durch den Prozessor bestimmt sind, um den ersten Schlüssel an einen Authentisierungsserver, der aus den auswählbaren Authentisierungsservern ausgewählt ist, zu senden (413).

15. Vorrichtung nach Anspruch 13, wobei die Speichereinrichtung weiterhin Instruktionen speichert, die zur Ausführung durch den Prozessor bestimmt sind, um den ersten Schlüssel an eine zentrale Datenbank (124) zu senden (406), die von dem Authentisierungsserver, der aus den auswählbaren Authentisierungsservern ausgewählt ist, zugänglich ist.

16. Vorrichtung nach Anspruch 15, wobei die Speichereinrichtung weiterhin Instruktionen speichert, die zur Ausführung durch den Prozessor bestimmt sind, um wenigstens einen Teil der Informationen über auswählbare Authentisierungsserver in dem Telekommunikationssystem von der zentralen Datenbank zu erhalten.

17. Vorrichtung nach Anspruch 15, wobei die Speichereinrichtung Instruktionen speichert, die zur Ausführung durch den Prozessor bestimmt sind, um von der zentralen Datenbank einen ersten Schlüssel für ein Benutzerendgerät zu erhalten, wenn eine nachfolgende Authentisierung des Benutzergeräts vorgenommen wird.

18. Vorrichtung nach Anspruch 17, wobei die Speichereinrichtung Instruktionen speichert, die zur Ausführung durch den Prozessor bestimmt sind, um einen zweiten Schlüssel von der Datenbank zu erhalten (410), wenn eine nachfolgende Authentisierung des Benutzerendgeräts durchgeführt wird, wobei der zweite Schlüssel von dem ersten Schlüssel ableitbar ist und dazu nutzbar ist, die Kommunikation zwischen dem Benutzerendgerät und dem Telekommunikationssystem zu entschlüsseln.

19. Computerprogramm zur Authentisierung eines Benutzerendgeräts (100) durch einen computerbasierten Authentisierungsserver (121) in einem Telekommunikationssystem, umfassend:
einen computerlesbaren Programmcode zur Verarbeitung des Empfangs (301) einer Benutzerkennung von dem Benutzerendgerät,
einen computerlesbaren Programmcode zur Authentisierung (303) dem empfangenen Benutzerkennung, und
einen computerlesbaren Programmcode, um den computerbasierten Authentisierungsserver zum Senden (307) einer neuen Benutzerkennung an das Benutzerendgerät zu veranlassen, die von dem Benutzerendgerät in einer nachfolgenden Authentisierung genutzt werden kann, **dadurch gekennzeichnet, dass** es weiter umfasst:
einen computerlesbaren Programmcode zur Auswahl (305) der neuen Benutzerkennung für eine nachfolgende Authentisierung gemäß einer Statusinformation (203-3) über auswählbare Authentisierungsserver (121, 122, 123) in dem Telekommunikationssystem, wobei die ausgewählte neue Benutzerkennung Adressierungsinformationen enthält, die dazu nutzbar sind, eine nachfolgende Authentisierung des Benutzerendgeräts an einen Authentisierungsserver innerhalb der auswählbaren Authentisierungsserver weiterzuleiten.

## Revendications

1. Procédé destiné à authentifier un terminal utilisateur (100) dans un système de télécommunication, comportant les étapes ci-dessous consistant à :
- recevoir (301), dans un serveur d'authentification (121) dudit système de télécommunication, un identifiant d'utilisateur en provenance du terminal utilisateur ;
- authentifier (303), à partir du serveur d'authentification, l'identifiant d'utilisateur reçu ; et
- envoyer (307) un nouvel identifiant d'utilisateur du serveur d'authentification au terminal utilisateur, lequel doit être utilisé par ledit terminal utilisateur au cours d'une authentification subséquente **caractérisé en ce que** le procédé comporte en outre l'étape ci-dessous consistant à :
- sélectionner (305), à partir dudit serveur d'authentification, ledit nouvel identifiant d'utilisateur pour une authentification subséquente selon des informations d'état (203-3) connexes à des serveurs d'authentification sélectionnables (121, 122, 123) dans ledit système de télécommunication, dans lequel le nouvel identifiant d'utilisateur sélectionné comporte des informations d'adressage utilisables en vue d'acheminer une authentification subséquente dudit terminal utilisateur à un serveur d'authentification parmi lesdits serveurs d'authentification sélectionnables.

2. Procédé selon la revendication 1, dans lequel le nouvel identifiant d'utilisateur sélectionné présente un format *d'identifiant d'accès réseau,* et dans lequel les informations d'adressage sont envoyées dans sa partie de domaine.

3. Procédé selon la revendication 1, dans lequel les informations d'adressage comportent des données utilisables en vue de déterminer au moins l'un des éléments ci-dessous :
- un serveur d'authentification spécifique parmi lesdits serveurs d'authentification sélectionnables ;
- un ensemble de serveurs d'authentification parmi lesdits serveurs d'authentification sélectionnables ;
- un serveur d'authentification spécifique lequel n'est pas un serveur d'authentification sélectionnable pour acheminer une authentification subséquente dudit terminal utilisateur ;
- un ensemble de serveurs d'authentification lesquels ne sont pas des serveurs d'authentification sélectionnables pour acheminer une authentification subséquente dudit terminal utilisateur.

4. Procédé selon la revendication 1, comportant en outre les étapes ci-dessous consistant à :
- générer (304), dans ledit serveur d'authentification, une première clé, suite à la réussite d'une authentification dudit terminal utilisateur ; et
- stocker ladite clé accessible par au moins un desdits serveurs d'authentification sélectionnables.

5. Procédé selon la revendication 4, dans lequel l'étape de stockage comporte l'étape ci-dessous consistant à :
- envoyer (413), à partir dudit serveur d'authentification, ladite première clé à un serveur d'authentification sélectionné parmi lesdits serveurs d'authentification sélectionnables.

6. Procédé selon la revendication 4, dans lequel l'étape de stockage comporte l'étape ci-dessous consistant à :
- envoyer (406), à partir dudit serveur d'authentification, ladite première clé à une base de données centrale (124) accessible par un serveur d'authentification sélectionné parmi lesdits serveurs d'authentification sélectionnables.

7. Procédé selon la revendication 6, dans lequel au moins une partie des informations connexes à des serveurs d'authentification sélectionnables dans ledit système de télécommunication est obtenue à partir de ladite base de données centrale.

8. Procédé selon la revendication 6, comportant en outre l'étape ci-après consistant à :
- délivrer (410) ladite première clé de ladite base de données centrale à un serveur d'authentification mettant en oeuvre une authentification subséquente dudit terminal utilisateur.

9. Procédé selon la revendication 6, comportant en outre les étapes ci-dessous consistant à :
- générer (309), dans ladite base de données centrale, une seconde clé, laquelle peut être calculée à partir de la première clé, et laquelle est utilisable pour chiffrer des communications entre ledit terminal utilisateur et ledit système de télécommunication ; et
- délivrer (410) ladite seconde clé de ladite base de données centrale à un serveur d'authentification mettant en oeuvre une authentification subséquente dudit terminal utilisateur.

10. Dispositif (121) destiné à authentifier un terminal utilisateur (100) dans un système de télécommunication, le dispositif comportant un processeur (2010) et un dispositif de stockage (2031) en communication avec ledit processeur et stockant des instructions (203-1) aptes à être exécutées par ledit processeur pour :
- recevoir (301) un identifiant d'utilisateur en provenance du terminal utilisateur ;
- authentifier (303) l'identifiant d'utilisateur reçu ; et
- envoyer (307) un nouvel identifiant d'utilisateur au terminal utilisateur, lequel doit être utilisé par ledit terminal utilisateur au cours d'une authentification subséquente ;
**caractérisé en ce que** le dispositif de stockage stocke en outre des instructions aptes à être exécutées par ledit processeur en vue de :
- sélectionner (305) ledit nouvel identifiant d'utilisateur pour une authentification subséquente selon des informations d'état (203-3) connexes à des serveurs d'authentification sélectionnables (121, 122, 123) dans ledit système de télécommunication, dans lequel le nouvel identifiant d'utilisateur sélectionné comporte des informations d'adressage utilisables en vue d'acheminer une authentification subséquente dudit terminal utilisateur à un serveur d'authentification parmi lesdits serveurs d'authentification sélectionnables.

11. Dispositif selon la revendication 10, dans lequel le nouvel identifiant d'utilisateur sélectionné présente un format *d'identifiant d'accès réseau,* et dans lequel les informations d'adressage sont envoyées dans sa partie de domaine.

12. Dispositif selon la revendication 10, dans lequel les informations d'adressage comportent des données utilisables en vue de déterminer au moins l'un des éléments ci-dessous :
- un serveur d'authentification spécifique parmi lesdits serveurs d'authentification sélectionnables ;
- un ensemble de serveurs d'authentification parmi lesdits serveurs d'authentification sélectionnables ;
- un serveur d'authentification spécifique lequel n'est pas un serveur d'authentification sélectionnable pour acheminer une authentification subséquente dudit terminal utilisateur ;
- un ensemble de serveurs d'authentification lesquels ne sont pas des serveurs d'authentification sélectionnables pour acheminer une authentification subséquente dudit terminal utilisateur.

13. Dispositif selon la revendication 10, dans lequel le dispositif de stockage stocke en outre des instructions aptes à être exécutées par ledit processeur en vue de :
- générer (304) une première clé suite à la réussite d'une authentification dudit terminal utilisateur ; et
- stocker ladite clé accessible par au moins un desdits serveurs d'authentification sélectionnables.

14. Dispositif selon la revendication 13, dans lequel le dispositif de stockage stocke en outre des instructions aptes à être exécutées par ledit processeur en vue d'envoyer (413) ladite première clé à un serveur d'authentification sélectionné parmi lesdits serveurs d'authentification sélectionnables.

15. Dispositif selon la revendication 13, dans lequel le dispositif de stockage stocke en outre des instructions aptes à être exécutées par ledit processeur en vue d'envoyer (406) ladite première clé à une base de données centrale (124) accessible par un serveur d'authentification sélectionné parmi lesdits serveurs d'authentification sélectionnables.

16. Dispositif selon la revendication 15, dans lequel le dispositif de stockage stocke en outre des instructions aptes à être exécutées par ledit processeur en vue d'obtenir au moins une partie des informations connexes à des serveurs d'authentification sélectionnables dans ledit système de télécommunication de ladite base de données centrale.

17. Dispositif selon la revendication 15, dans lequel le dispositif de stockage stocke des instructions aptes à être exécutées par ledit processeur en vue d'obtenir (410), de ladite base de données centrale, une première clé générée pour un terminal utilisateur lors de la mise en oeuvre d'une authentification subséquente dudit terminal utilisateur.

18. Dispositif selon la revendication 17, dans lequel le dispositif de stockage stocke des instructions aptes à être exécutées par ledit processeur en vue d'obtenir (410) une seconde clé de ladite base de données centrale lors de la mise en oeuvre d'une authentification subséquente dudit terminal utilisateur, ladite seconde clé peut être calculée à partir de la première clé et est utilisable pour chiffrer des communications entre ledit terminal utilisateur et ledit système de télécommunication.

19. Programme informatique destiné à authentifier un terminal utilisateur (100) à partir d'un serveur d'authentification à base d'ordinateur (121) dans un système de télécommunication, comportant :
- un code de programme lisible par un ordinateur pour traiter la réception (301) d'un identifiant d'utilisateur en provenance du terminal utilisateur ;
- un code de programme lisible par un ordinateur pour authentifier (303) l'identifiant d'utilisateur reçu ; et
- un code de programme lisible par un ordinateur pour amener le serveur d'authentification à base d'ordinateur à envoyer (307) un nouvel identifiant d'utilisateur au terminal utilisateur, lequel doit être utilisé par ledit terminal utilisateur au cours d'une authentification subséquente ;
**caractérisé en ce qu'**il comporte en outre :
- un code de programme lisible par un ordinateur pour sélectionner (305) ledit nouvel identifiant d'utilisateur pour une authentification subséquente selon des informations d'état (203-3) connexes à des serveurs d'authentification sélectionnables (121, 122, 123) dans ledit système de télécommunication, dans lequel le nouvel identifiant d'utilisateur sélectionné comporte des informations d'adressage utilisables en vue d'acheminer une authentification subséquente dudit terminal utilisateur à un serveur d'authentification parmi lesdits serveurs d'authentification sélectionnables.
